# EUROPÄISCHE PATENTSCHRIFT

(11) **EP 3 011 209 B1**
(45) Veröffentlichungstag und Bekanntmachung des Hinweises auf die Patenterteilung: **19.09.2018**
(21) Anmeldenummer: 13731103.1
(22) Anmeldetag: 19.06.2013
(51) Int. Cl.: F16K 15/06, F16K 27/02

(54) **SAUGSCHLAUCHARMATUR**
SUCTION HOSE FITTING
FERRURE DE TUYAU D'ASPIRATION

(43) Veröffentlichungstag der Anmeldung: 27.04.2016
(73) Patentinhaber: Alfred Kärcher SE & Co. KG, 71364 Winnenden (DE)
(72) Erfinder: FIACK, Thomas, 71364 Winnenden (DE); KEETMAN, Anja, 71640 Ludwigsburg (DE); DIRNBERGER, Sven, 71711 Steinheim (DE)
(74) Vertreter: Hoeger, Stellrecht & Partner Patentanwälte mbB
(86) Internationale Anmeldenummer: PCT/EP2013/062755
(87) Internationale Veröffentlichungsnummer: WO 2014/202133

(56) Entgegenhaltungen:
- FR-A- 620 882
- FR-A- 1 095 574
- US-A- 1 076 128
- US-A- 3 540 472
- US-A1- 2004 134 537
- US-A1- 2008 272 590

## Beschreibung

Die Erfindung betrifft eine Saugschlaucharmatur mit den Merkmalen des Oberbegriffes von Patentanspruch 1.

Saugschlaucharmaturen mit einem Gehäuse, das eine Einlassöffnung und eine Auslassöffnung aufweist, wobei an der Einlassöffnung eine Filtereinrichtung und an der Auslassöffnung eine Anschlusseinrichtung für den Saugschlauch angeordnet sind und wobei im Gehäuse ein in Richtung der Einlassöffnung schließendes Rückschlagventil angeordnet ist, das einen Ventilkörper aufweist, der im Gehäuse zwischen einer Schließstellung und einer Offenstellung hin und her bewegbar ist, kommen bei Saugschläuchen von Hochdruckreinigungsgeräten zum Einsatz. Mit Hilfe von Hochdruckreinigungsgeräten kann eine Flüssigkeit, vorzugsweise Wasser, unter Druck gesetzt und anschließend über einen Druckschlauch abgegeben werden. Am freien Ende des Druckschlauchs kann beispielsweise eine Spritzdüse oder eine Reinigungslanze angeordnet sein, mit deren Hilfe die vom Hochruckreinigungsgerät unter Druck gesetzte Flüssigkeit auf einen zu reinigenden Gegenstand gerichtet werden kann.

Häufig wird dem Hochdruckreinigungsgerät Wasser aus einem Wasserversorgungsnetz zugeführt. Es kann allerdings auch vorgesehen sein, dass das Hochdruckreinigungsgerät Wasser aus einem Wasservorrat ansaugt, beispielsweise einer Wassertonne oder einem Wasserteich. Hierzu wird an einen Saugeinlass des Hochdruckreinigungsgerätes ein Saugschlauch angeschlossen, der mit seinem freien Ende in den Wasservorrat eintaucht. Um zu vermeiden, dass Verunreinigungen mit angesaugt werden, wird an das freie Ende des Saugschlauchs eine Saugschlaucharmatur der eingangs genannten Art angeschlossen. Die Saugschlaucharmatur weist ein Gehäuse auf mit einer Einlassöffnung und einer Auslassöffnung. An der Einlassöffnung ist eine Filtereinrichtung angeordnet, beispielsweise ein Sieb oder ein Gitter. Das angesaugte Wasser durchströmt die Filtereinrichtung, wobei gröbere Verunreinigungen, beispielsweise Algen und Pflanzenteile, an der Filtereinrichtung zurückgehalten werden können.

Im Gehäuse der Saugschlaucharmatur ist ein Rückschlagventil angeordnet mit einem Ventilkörper, der zwischen einer Schließstellung und einer Offenstellung hin und her bewegbar ist. Das Rückschlagventil schließt in Richtung der Einlassöffnung und folglich entgegen der sich beim Ansaugen von Flüssigkeit ausbildenden Strömungsrichtung. Dadurch wird beim Abschalten des Hochdruckreinigungsgerätes, das heißt bei Beendigung des Saugbetriebs Wasser im Saugschlauch zurückgehalten, so dass das Wasser nicht über die Einlassöffnung des Gehäuses aus der Saugschlaucharmatur herausfließen kann. Das Rückschlagventil nimmt hierzu seine Schließstellung ein. Wird zu einem späteren Zeitpunkt das Hochdruckreinigungsgerät wieder eingeschaltet und der Saugbetrieb fortgesetzt, so steht dem Hochdruckreinigungsgerät bereits beim Einschalten wieder Wasser aus dem Saugschlauch bereit, so dass ein "Trockenlaufen" des Hochdruckreinigungsgeräts vermieden wird.

Saugschlaucharmaturen mit den Merkmalen des Oberbegriffes von Patentanspruch 1 sind aus der US 3,540,472 A und der FR 1 095 574 A bekannt.

Während des Saugbetriebs setzen sich zunehmend Schmutzpartikel und sonstige Verunreinigungen an der Filtereinrichtung ab, die daher von Zeit zu Zeit gereinigt werden muss.

Aufgabe der vorliegenden Erfindung ist es, eine Saugschlaucharmatur der gattungsgemäßen Art derart weiterzubilden, dass die Reinigung der Filtereinrichtung auf einfache Weise durchgeführt werden kann.

Diese Aufgabe wird durch eine Saugschlaucharmatur mit den Merkmalen von Patentanspruch 1 gelöst.

In die Erfindung fließt der Gedanke mit ein, dass die Filtereinrichtung auf einfache Weise gereinigt werden kann, indem die Saugschlaucharmatur entgegen der sich während des normalen Saugbetriebes herrschenden Strömungsrichtung mit Flüssigkeit durchspült wird. Hierzu kann das Rückschlagventil der erfindungsgemäßen Saugschlaucharmatur manuell entsperrt werden, das heißt der Ventilkörper des Rückschlagventils kann manuell in seine Offenstellung überführt werden. Dies gibt die Möglichkeit, die Saugschlaucharmatur von der Auslassöffnung über das geöffnete Rückschlagventil zur Einlassöffnung mit Flüssigkeit, also vorzugsweise mit Wasser, zu durchströmen. Hierbei wird auch die Filtereinrichtung entgegen der sich beim normalen Saugbetrieb herrschenden Strömungsrichtung, das heißt in Gegenstromrichtung, durchströmt, und an der Schmutzseite der Filtereinrichtung anhaftende Schmutzpartikel und sonstige Verunreinigungen können auf einfache Weise mittels der die Filtereinrichtung durchströmenden Flüssigkeit abgetrennt werden.

Üblicherweise ist die Saugschlaucharmatur dauerhaft am Saugschlauch des Hochdruckreinigungsgeräts angeschlossen. Zur Reinigung der Filtereinrichtung der Saugschlaucharmatur ist es hierzu von Vorteil, wenn der Saugschlauch vom Saugeinlass des Hochdruckreinigungsgeräts gelöst und an einen Wasserhahn angeschlossen wird, wobei das Rückschlagventil der Saugschlaucharmatur manuell entsperrt wird. Der Saugschlauch kann dann zusammen mit der Saugschlaucharmatur in Gegenstromrichtung von Wasser durchspült werden, um die Saugschlaucharmatur und insbesondere deren Filtereinrichtung auf einfache Weise zu reinigen.

Erfindungsgemäß ist der Ventilkörper des Rückschlagventils mittels eines aus dem Gehäuse der Saugschlaucharmatur herausragenden Stellorgans manuell in seine Offenstellung bewegbar. Das Stellorgan kann vom Benutzer mit der Hand betätigt werden, um den Ventilkörper des Rückschlagventils in seine Offenstellung zu bewegen.

Das Stellorgan ist als Ventilstößel ausgebildet, der mit dem Ventilkörper starr verbunden ist.

Bevorzugt ist der Ventilstößel mit dem Ventilkörper einstückig verbunden. So kann beispielsweise vorgesehen sein, dass der Ventilstößel und der Ventilkörper ein einteiliges Kunststoffformteil ausbilden.

Bei einer besonders bevorzugten Ausgestaltung weist das Gehäuse der Saugschlaucharmatur eine Vorderseite und eine Rückseite auf, wobei der Ventilstößel an der Vorderseite aus dem Gehäuse herausragt. Die Auslassöffnung ist bevorzugt der Rückseite des Gehäuses zugewandt. Zum Entsperren des Rückschlagventils kann der Ventilstößel vom Benutzer in Richtung auf das Gehäuse verschoben werden. In der Schließstellung des Ventilkörpers ragt der Ventilstößel bei einer derartigen Ausgestaltung der Erfindung weiter aus dem Gehäuse hervor als in der Offenstellung des Ventilkörpers. Zum Entsperren des Rückschlagventils kann der Benutzer das Gehäuse der Saugschlaucharmatur mit seiner Vorderseite gegen einen Gegenstand drücken. Hierbei wird der an der Vorderseite aus dem Gehäuse herausragende Ventilstößel in das Innere des Gehäuses gedrückt, so dass der Ventilkörper seine Offenstellung einnimmt und das Rückschlagventil entsperrt ist. Die Handhabung der Saugschlaucharmatur zum manuellen Entsperren des Rückschlagventils gestaltet sich bei einer derartigen Ausgestaltung besonders einfach.

Von Vorteil ist es, wenn an der Vorderseite des Gehäuses eine Durchgangsöffnung angeordnet ist, die eine Führung des Ventilstößels ausbildet. An der Durchgangsöffnung kann der Ventilstößel verschiebbar, vorzugsweise linear verschiebbar, gehalten sein.

Das Rückschlagventil stellt sicher, dass beim Abschalten des Hochdruckreinigungsgeräts Wasser im Saugschlauch verbleibt, so dass beim Wiedereinschalten des Hochdruckreinigungsgeräts zunächst nicht etwa das gesamte Innenvolumen des Saugschlauchs neu mit Wasser befüllt werden muss sondern dem Hochdruckreinigungsgerät unmittelbar Wasser aus dem Saugschlauch zur Verfügung steht. Um allerdings Wasser über die Einlassöffnung ansaugen zu können, muss das Rückschlagventil in seine Offenstellung bewegt werden. Das vom Hochdruckreinigungsgerät angesaugte Wasser erfährt beim Durchströmen der Saugschlaucharmatur gewisse Strömungsverluste. Um die Strömungsverluste besonders gering zu halten, ist das Rückschlagventil bei einer vorteilhaften Ausführungsform der erfindungsgemäßen Saugschlaucharmatur federlos ausgestaltet. Das Rückschlagventil weist somit keine Rückstellfeder auf, die den Ventilkörper in seine Schließstellung überführt, vielmehr geht der Ventilkörper bei Druckbeaufschlagung in Gegenstromrichtung selbsttätig, ohne Einwirkung einer Federkraft, in seine Schließstellung über. In entsprechender Weise öffnet das Rückschlagventil, sobald der Ventilkörper mit Druck in Strömungsrichtung beaufschlagt wird. Die Bewegung des Ventilkörpers ist somit von der Druckdifferenz abhängig, die sich am Ventilkörper ausbildet. Wird das Hochdruckreinigungsgerät in Betrieb gesetzt, so sinkt der Druck im Saugschlauch und damit auch im Bereich der Auslassöffnung der Saugschlaucharmatur. Dies hat zur Folge, dass der Ventilkörper selbsttätig seine Offenstellung einnimmt. Wird das Hochdruckreinigungsgerät abgeschaltet, so führt dies aufgrund einer unvermeidlichen Rückspeisung des Flüssigkeitsdrucks aus dem Hochdruckbereich des Hochdruckreinigungsgeräts in den Niederdruckbereich des Hochdruckreinigungsgeräts zu einer kurzzeitigen Druckerhöhung im Saugschlauch und damit auch im Bereich der Auslassöffnung der Saugschlaucharmatur. Dies wiederum hat zur Folge, dass der Ventilkörper des Rückschlagventils selbsttätig seine Schließstellung einnimmt.

Bei einer vorteilhaften Ausführungsform der Erfindung weist das Gehäuse der Saugschlaucharmatur mindestens eine Entlastungsöffnung auf, die mit einem zwischen dem Ventilsitz des Rückschlagventils und der Auslassöffnung angeordneten Innenraum des Gehäuses in Strömungsverbindung steht, wobei diese Strömungsverbindung mittels eines Entlastungsventils in Abhängigkeit von dem im Innenraum des Gehäuses herrschenden Druck selbsttätig unterbrechbar und freigebbar ist.

Die Bereitstellung von mindestens einer Entlastungsöffnung und eines druckabhängig öffnenden und schließenden Entlastungsventils hat den Vorteil, dass die Druckbelastung der Saugschlaucharmatur beim Abschalten des Hochdruckreinigungsgeräts gering gehalten werden kann. Wie bereits erwähnt, bildet sich beim Abschalten des Hochdruckreinigungsgeräts im Saugschlauch und damit auch im Innenraum des Gehäuses zwischen dem Ventilsitz des Rückschlagventils und der Auslassöffnung kurzzeitig ein erhöhter Druck aus. Überschreitet der Druck einen vorgebbaren Maximalwert, so geht das bei der vorteilhaften Ausführungsform zum Einsatz kommende Entlastungsventil selbsttätig in seine Offenstellung über, in der es die Strömungsverbindung zwischen dem Innenraum des Gehäuses und der mindestens einen Entlastungsöffnung freigibt. Über die Entlastungsöffnung kann dann Flüssigkeit aus dem Innenraum des Gehäuses entweichen, so dass der im Innenraum des Gehäuses herrschende Druck abgebaut wird. Unterschreitet der im Innenraum des Gehäuses herrschende Druck den vorgegebenen Maximaldruck, so nimmt das Entlastungsventil wieder seine Schließstellung ein, in der es die Strömungsverbindung zwischen dem Innenraum des Gehäuses und der mindestens einen Entlastungsöffnung unterbricht.

Von Vorteil ist es, wenn der Innenraum des Gehäuses über einen Entlastungskanal mit der mindestens einen Entlastungsöffnung in Strömungsverbindung steht, wobei im Entlastungskanal ein in Abhängigkeit von dem im Innenraum des Gehäuses herrschenden Druck selbsttätig zwischen einer Schließstellung und einer Offenstellung hin und her bewegbarer Schließkörper angeordnet ist. Bei einer derartigen Ausführungsform ist der zwischen dem Ventilsitz des Rückschlagventils und der Auslassöffnung angeordnete Innenraum des Gehäuses über einen Entlastungskanal mit der mindestens einen Entlastungsöffnung verbunden. Im Entlastungskanal befindet sich ein Schließkörper, der zwischen einer Offenstellung und einer Schließstellung hin und her bewegbar ist. In der Offenstellung gibt er den Entlastungskanal frei und in der Schließstellung verschließt er den Entlastungskanal.

Von besonderem Vorteil ist es, wenn der Entlastungskanal ringförmig ausgestaltet ist, wobei sich sein Strömungsquerschnitt mit zunehmendem Abstand zum Innenraum des Gehäuses erweitert, und wenn der Schließkörper als elastisch dehnbarer Schließring ausgestaltet ist. Der elastisch dehnbare Schließring ist im Entlastungskanal angeordnet. Ist der im Innenraum des Gehäuses herrschende Druck kleiner als ein vorgebbarer Maximaldruck, so kann der Schließring im Entlastungskanal eine Position einnehmen, in der er den Entlastungskanal vollständig verschließt. Überschreitet der im Innenraum des Gehäuses herrschende Druck den vorgebbaren Maximalwert, so dehnt sich der Schließring elastisch aus und ändert dadurch seine Position, so dass er im ausgedehnten Zustand eine Stellung in einem Bereich des Entlastungskanals einnimmt, in der der Entlastungskanal einen größeren Strömungsquerschnitt aufweist. Dies hat zur Folge, dass der elastisch gedehnte Schließring den Entlastungskanal nicht mehr verschließen kann, so dass über den Entlastungskanal eine Strömungsverbindung zwischen dem Innenraum des Gehäuses und der mindestens einen Entlastungsöffnung freigegeben wird. Flüssigkeit kann somit über den Entlastungskanal zu der mindestens einen Entlastungsöffnung strömen. Dadurch sinkt der Druck im Innenraum des Gehäuses, und bei Unterschreiten des vorgegebenen Maximaldruckes zieht sich der Schließring selbsttätig wieder so weit zusammen, dass er eine Position in einem Bereich des Entlastungskanals mit geringerem Strömungsquerschnitt einnimmt und hierbei den Entlastungskanal vollständig verschließt. Dadurch wird die Strömungsverbindung zwischen dem Innenraum des Gehäuses und der mindestens einen Entlastungsöffnung wieder unterbrochen.

Der Entlastungskanal weist bei einer bevorzugten Ausgestaltung der Erfindung eine kegelmantelförmige Innenwand und eine kegelmantelförmige Außenwand auf, die zwischen sich einen Ringraum begrenzen, wobei sich der Ringraum in Richtung der mindestens einen Entlastungsöffnung kontinuierlich erweitert und der Schließring den Ringraum in einer Schließstellung verschließt. Die Materialstärke des Schließrings wird bei einer derartigen Ausgestaltung derart gewählt, dass sie in einem ersten Bereich des Entlastungskanals den Abstand zwischen der kegelmantelförmigen Innenwand und der kegelmantelförmigen Außenwand überschreitet. Der Schließring verschließt somit den Entlastungskanal. Dehnt sich der Schließring aus, so bewegt er sich in einen Bereich des Entlastungskanals, in dem der Abstand zwischen der kegelmantelförmigen Innenwand und der kegelmantelförmigen Außenwand größer ist als die Materialstärke des Schließrings. Der Schließring kann daher den Entlastungskanal nicht mehr vollständig verschließen und Flüssigkeit kann den Entlastungskanal durchströmen. Bei fehlender Druckbelastung zieht sich der Schließring wieder zusammen, wobei er an der kegelmantelförmigen Innenwand soweit entlanggleitet, bis er mit seiner Außenseite auf die kegelmantelförmige Außenwand trifft und dadurch den Entlastungskanal wieder verschließt.

Der Schließring ist günstigerweise als O-Ring ausgestaltet. Derartige O-Ringe weisen nur sehr geringe Herstellungskosten auf.

Zum Anschließen des Saugschlauches weist die Saugschlaucharmatur an der Auslassöffnung des Gehäuses eine Anschlusseinrichtung auf. Diese umfasst bei einer vorteilhaften Ausführungsform einen Anschlussnippel, der unter Ausbildung eines Ringraums von einer radial verformbaren Presshülse umgeben ist, wobei ein Endbereich des Saugschlauchs in den Ringraum einführbar und mittels der Presshülse radial gegen den Anschlussnippel pressbar ist. Das Anschließen des Saugschlauches an die Saugschlaucharmatur gestaltet sich somit sehr einfach.

Um eine mechanisch stark belastbare Verbindung zwischen dem Saugschlauch und der Saugschlaucharmatur herstellen zu können, ist es von Vorteil, wenn ein Klemmring auf die Presshülse aufschraubbar ist. Der Klemmring kann nach Art einer Überwurfmutter ausgestaltet sein und ein Innengewinde aufweisen, das mit einem Außengewinde der Presshülse zusammenwirkt. Beim Aufschrauben des Klemmrings auf die Presshülse kann die Presshülse vom Klemmring radial nach innen gedrückt werden und dadurch eine Presskraft auf den in den Ringraum zwischen der Presshülse und dem Anschlussnippel eingeführten Saugschlauch ausüben.

Die Presshülse weist bei einer besonders vorteilhaften Ausgestaltung mindestens eine Entlüftungsöffnung auf zur Entlüftung des Ringraums. Wie bereits erwähnt, kann der Saugschlauch in den Ringraum eingeführt werden. Hierbei wird allerdings in aller Regel das Volumen des Ringraums nicht vollständig vom Saugschlauch ausgefüllt, vielmehr verbleibt im Ringraum noch Luft. Wird die Saugschlaucharmatur in einen Wasservorrat eingetaucht, beispielsweise in einen Wasserteich oder in eine Wassertonne, so führt die im Ringraum verbliebene Luft zu einem Auftrieb der Saugschlaucharmatur, so dass diese an der Wasseroberfläche des Wasservorrats verbleibt. Dies ist nicht in allen Fällen gewünscht. Es ist deshalb von Vorteil, wenn die im Ringraum befindliche Luft über mindestens eine Entlüftungsöffnung entweichen kann, denn dies führt zu einem Absinken der Saugschlaucharmatur unter die Wasseroberfläche des Wasservorrats.

Um das Absinken der Saugschlaucharmatur unter die Wasseroberfläche zu verstärken, ist es von Vorteil, wenn im Ringraum zwischen dem Anschlussnippel und der Presshülse ein Gewichtskörper angeordnet ist. Der Gewichtskörper kann beispielsweise in Form eines kurzen Rohrstücks ausgestaltet sein, das in den Ringraum eingeführt wird, wobei es den Ringraum in axialer Richtung nur teilweise ausfüllt, so dass anschließend auch ein Endbereich des Saugschlauchs in den Ringraum eingeführt werden kann.

Es kann allerdings auch vorgesehen sein, dass im Ringraum ein Schwimmkörper angeordnet ist. Ein derartiger Schwimmkörper unterstützt den Auftrieb der Saugschlaucharmatur. Ein besonders hoher Auftrieb der Saugschlaucharmatur kann wünschenswert sein, falls die Saugschlaucharmatur nicht unter die Wasseroberfläche des Wasservorrats absinken soll. Dies kann beispielsweise wünschenswert sein, wenn Wasser aus einem Teich abgesaugt werden soll, in dem sich viele Wasserpflanzen befinden. In einem derartigen Fall ist es günstig, wenn die Saugschlaucharmatur möglichst an der Wasseroberfläche verbleibt, da das Wasser in diesem Bereich am wenigsten Verunreinigungen aufweist.

Von Vorteil ist es daher, wenn im Ringraum zwischen dem Anschlussnippel und der Presshülse wahlweise ein Gewichtskörper oder ein Schwimmkörper positionierbar ist.

Bevorzugt ist der Schwimm- oder Gewichtskörper bedarfsweise in den Ringraum einführbar und dem Ringraum entnehmbar.

Das Gehäuse der erfindungsgemäßen Saugschlaucharmatur weist bei einer vorteilhaften Ausführungsform ein erstes und ein zweites Gehäuseteil auf, wobei das erste Gehäuseteil die Filtereinrichtung umfasst und mit dem zweiten Gehäuseteil lösbar verbindbar ist. Eine derartige Ausgestaltung hat den Vorteil, dass die Filtereinrichtung zusammen mit dem kompletten ersten Gehäuseteil vom restlichen Teil der Saugschlaucharmatur getrennt werden kann.

Die lösbare Verbindung zwischen dem ersten Gehäuseteil und dem zweiten Gehäuseteil kann beispielsweise mit Hilfe einer Schraubverbindung oder auch mit Hilfe einer Bajonettverbindung erfolgen. Alternativ kann auch eine Rast- oder Klemmverbindung zwischen dem ersten Gehäuseteil und dem zweiten Gehäuseteil zum Einsatz kommen.

Das erste Gehäuseteil bildet vorteilhafterweise einen Ventilsitz des Rückschlagventils aus und der Ventilkörper des Rückschlagventils ist bevorzugt am zweiten Gehäuseteil beweglich gehalten. Das erste Gehäuseteil und das zweite Gehäuseteil bilden bei einer derartigen Ausgestaltung zwischen sich einen Innenraum des Gehäuses aus, in dem der Ventilkörper positioniert ist. Der Ventilkörper kann in einer Schließstellung des Rückschlagventils dicht an einem Ventilsitz des ersten Gehäuseteils anliegen und kann am zweiten Gehäuseteil beweglich gehalten sein.

Von Vorteil ist es, wenn der Ventilkörper des Rückschlagventils am zweiten Gehäuseteil linear verschiebbar gehalten ist. Insbesondere kann vorgesehen sein, dass das erste Gehäuseteil und das zweite Gehäuseteil eine gemeinsame Längsachse aufweisen und der Ventilkörper kollinear zur Längsachse verschiebbar am zweiten Gehäuseteil gehalten ist.

Das zweite Gehäuseteil weist bevorzugt ein Führungsteil auf, an dem ein Führungselement des Ventilkörpers des Rückschlagventils linear verschiebbar gehalten ist und der mit einem Anschlussnippel und einer den Anschlussnippel unter Ausbildung eines Ringraums in Umfangsrichtung umgebenden, radial verformbaren Presshülse einstückig verbunden ist. Bei einer derartigen Ausgestaltung der Erfindung bildet das zweite Gehäuseteil den Anschlussnippel und die Presshülse sowie auch ein Führungsteil aus. Ein Endbereich des Saugschlauchs kann in den Ringraum zwischen dem Anschlussnippel und die Presshülse eingeführt werden und ein Führungselement des Ventilkörpers des Rückschlagventils ist am Führungsteil des zweiten Gehäuseteils linear verschiebbar gehalten.

In Ergänzung zum ersten Gehäuseteil und zum zweiten Gehäuseteil weist das Gehäuse der Saugschlaucharmatur bei einer vorteilhaften Ausführungsform ein drittes Gehäuseteil auf, das als Klemmring ausgebildet ist, der auf die Presshülse des zweiten Gehäuseteils aufgeschraubt werden kann.

Die nachfolgende Beschreibung einer bevorzugten Ausführungsform der Erfindung dient im Zusammenhang mit der Zeichnung der näheren Erläuterung. Es zeigen:
- Figur 1:: eine schematische Schnittansicht einer Saugschlaucharmatur, wobei ein Ventilkörper eines Rückschlagventils eine Offenstellung und ein Schließkörper eines Entlastungsventils eine Schließstellung einnimmt;
- Figur 2:: eine Schnittansicht der Saugschlaucharmatur aus Figur 1, wobei der Ventilkörper des Rückschlagventils eine Schließstellung und der Schließkörper des Entlastungsventils eine Schließstellung einnimmt, und
- Figur 3:: eine Schnittansicht der Saugschlaucharmatur aus Figur 1, wobei der Ventilkörper des Rückschlagventils eine Schließstellung und der Schließkörper des Entlastungsventils eine Offenstellung einnimmt.

In der Zeichnung ist schematisch eine vorteilhafte Ausführungsform einer erfindungsgemäßen Saugschlaucharmatur dargestellt, die insgesamt mit dem Bezugszeichen 10 belegt ist. Die Saugschlaucharmatur 10 weist ein Gehäuse 12 auf mit einem ersten Gehäuseteil 14, einem zweiten Gehäuseteil 16 und einem dritten Gehäuseteil 18. Das erste Gehäuseteil 14 bildet eine Vorderseite 20 des Gehäuses 12 aus und das zweite Gehäuseteil 16 bildet eine Rückseite 22 des Gehäuses 12 aus. Das dritte Gehäuseteil 18 kann auf das zweite Gehäuseteil 16 aufgeschraubt werden und ragt mit einem rückwärtigen Endabschnitt 24 über die Rückseite 22 des Gehäuses 12 hinaus.

Das erste Gehäuseteil 14 bildet mit einem sich an die Vorderseite 20 anschließenden vorderen Gehäuseabschnitt 26 eine Filtereinrichtung in Form eines Filterkäfigs 28 aus, der eine Vielzahl von Gehäuseöffnungen 30 aufweist, die sich jeweils zwischen zwei benachbarten Stegen 32 erstrecken. Die Gehäuseöffnungen 30 bilden in ihrer Gesamtheit eine Einlassöffnung 34 des Gehäuses 12 aus.

An den Filterkäfig 28 schließt sich über eine erste konische Erweiterung 36 des ersten Gehäuseteils 14 ein zylindrischer Mittelabschnitt 38 an, der über eine zweite konische Erweiterung 40 in einen zylindrischen Endabschnitt 42 des ersten Gehäuseteils 14 übergeht.

Das zweite Gehäuseteil 16 bildet einen Anschlussnippel 44 aus, der unter Ausbildung eines Ringraums 46 von einer Presshülse 48 umgeben ist. Über einen in das erste Gehäuseteil 14 eintauchenden Führungsabschnitt 50 des zweiten Gehäuseteils 16 ist der Anschlussnippel 44 einstückig mit der Presshülse 48 verbunden.

Die Presshülse 48 trägt an ihrem an den Führungsabschnitt 50 angrenzenden Endbereich einen radial nach außen weisenden Stützflansch 52, der an einer Endfläche 54 des zylindrischen Endabschnitts 42 des ersten Gehäuseteils 14 anliegt.

Im Abstand zum Stützflansch 52 trägt die Presshülse 48 an ihrer Außenseite ein Außengewinde 56, und in dem sich an das Außengewinde 56 anschließenden Bereich bildet die Presshülse 48 eine Vielzahl von in Umfangsrichtung des Anschlussnippels 44 in gleichmäßigem Abstand zueinander angeordnete Presszungen 58 aus. Die Presszungen 58 ermöglichen es, die Presshülse 48 in ihrem dem ersten Gehäuseteil 14 abgewandten Endbereich radial zu verformen.

Das dritte Gehäuseteil 18 ist nach Art einer Überwurfmutter ausgebildet und trägt innenseitig ein Innengewinde 60, das auf das Außengewinde 56 der Presshülse 48 aufgeschraubt ist. Im Übergangsbereich zwischen dem Innengewinde 60 und dem rückwärtigen Endabschnitt 24 weist das dritte Gehäuseteil 18 eine sich in Richtung des rückwärtigen Endabschnitts 24 konisch verjüngende Klemmfläche 62 auf, an der die freien Enden der Presszungen 58 beim Aufschrauben des dritten Gehäuseteils 18 auf die Presshülse 48 entlanggleiten, wobei sie radial nach innen gedrückt werden.

Im Ringraum 46 zwischen dem Anschlussnippel 44 und der Presshülse 48 ist im dargestellten Ausführungsbeispiel ein Schwimmkörper 64 angeordnet, der nach Art eines kurzen Rohrstücks ausgebildet ist und sich von einem Boden 66 des Ringraums 46 bis in Höhe des Außengewindes 56 der Presshülse 48 erstreckt.

Der Führungsabschnitt 50 des zweiten Gehäuseteils 16 weist einen kegelstumpfförmigen Endabschnitt 68 auf, der unter Ausbildung eines ringförmigen Entlastungskanals 70 von der zweiten konischen Erweiterung 40 des ersten Gehäuseteils 14 umgeben ist. Der Entlastungskanal 70 wird von einer kegelmantelförmigen Innenwand 72 des Endabschnitts 68 und einer kegelmantelförmigen Außenwand 74 der zweiten konischen Erweiterung 40 begrenzt. An den Entlastungskanal 70 schließt sich in Richtung auf den Stützflansch 52 ein zylindrischer Verbindungsabschnitt 76 an, über die der konische Endabschnitt 68 einstückig mit der Presshülse 48 verbunden ist.

Der zylindrische Verbindungsabschnitt 76 ist in Umfangsrichtung von einem Ringraum 78 umgeben, der außenseitig vom zylindrischen Endabschnitt 42 des ersten Gehäuseteils 14 begrenzt ist.

Der zylindrische Verbindungsabschnitt 76 weist mehrere, über seinen Umfang gleichmäßig verteilt angeordnete Entlüftungsöffnungen in Form von Entlüftungsbohrungen 80 auf, über die der Ringraum 46 in Höhe seines Bodens 66 mit dem Ringraum 78 in Verbindung steht. Der Ringraum 78 steht über mehrere Entlastungsöffnungen 82 mit der Umgebung der Saugschlaucharmatur 10 in Verbindung. Die Entlastungsöffnungen 82 durchgreifen den zylindrischen Endabschnitt 42 des ersten Gehäuseteils 14.

Der Führungsabschnitt 50 des zweiten Gehäuseteils 16 trägt eine Führungshülse 84, die über mehrere, radial verlaufende Haltearme 86 mit dem konischen Endabschnitt 68 einstückig verbunden ist.

Die Führungshülse 84 wird von einem Führungselement in Form eines Führungszapfens 88 durchgriffen, der einstückig mit einem tellerförmigen Ventilkörper 90 verbunden ist. Auf der dem Führungszapfen 88 abgewandten Seite schließt sich an den Ventilkörper 90 ein Ventilstößel 92 an, der den Filterkäfig 28 sowie eine an der Vorderseite 20 des Gehäuses 12 angeordnete Durchgangsöffnung 96 durchgreift. Mit seinem freien Ende ragt der Ventilstößel 92 an der Vorderseite 20 aus dem Gehäuse 12 heraus.

Der Ventilkörper 20 ist von einer Ringnut umgeben, in der ein erster O-Ring 98 angeordnet ist.

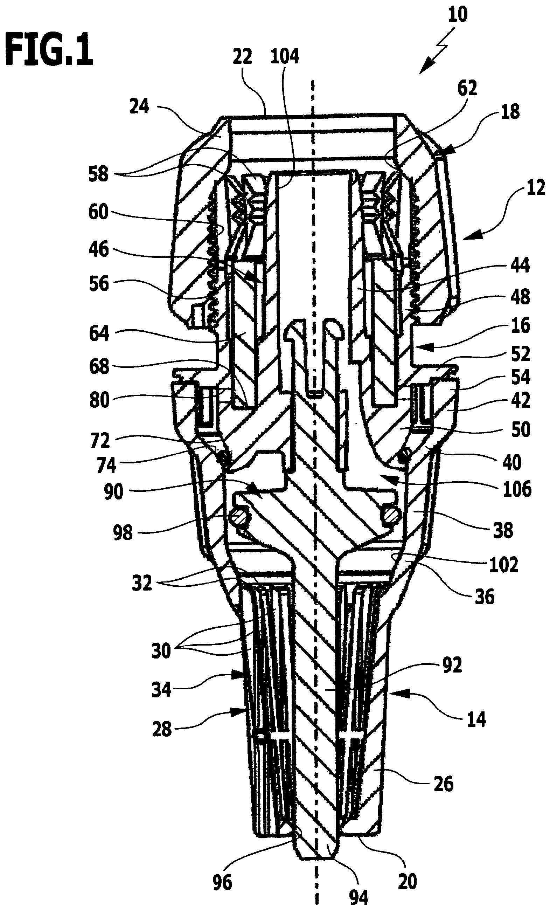

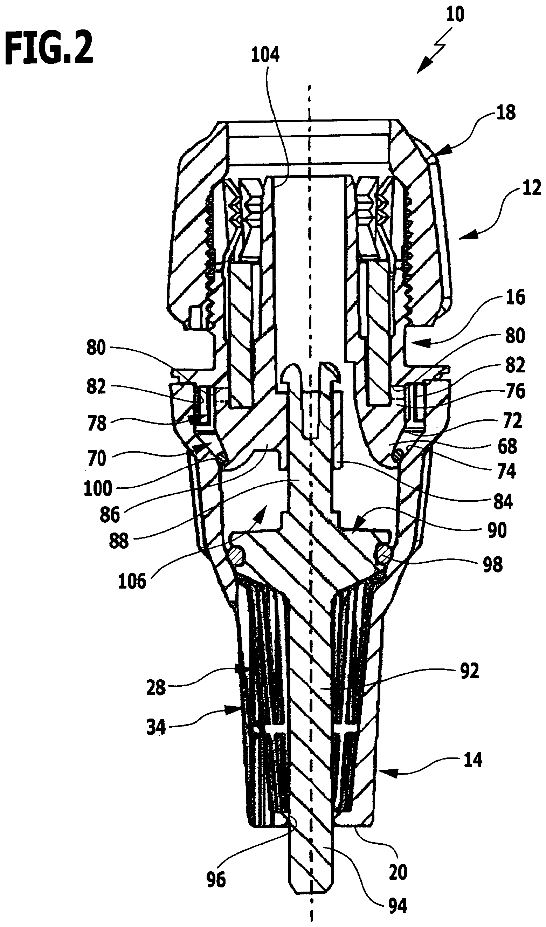

Ein zweiter O-Ring 100 ist im Entlastungskanal 70 angeordnet. Der zweite O-Ring ist elastisch dehnbar und nimmt in seiner in den Figuren 1 und 2 dargestellten Schließstellung eine dem Ventilkörper 20 zugewandte vordere Position ein, in der er den Entlastungskanal 70 verschließt, wobei er mit seiner Innenseite an der Innenwand 72 und mit seiner Außenseite an der Außenwand 74 des Entlastungskanals 70 dicht anliegt.

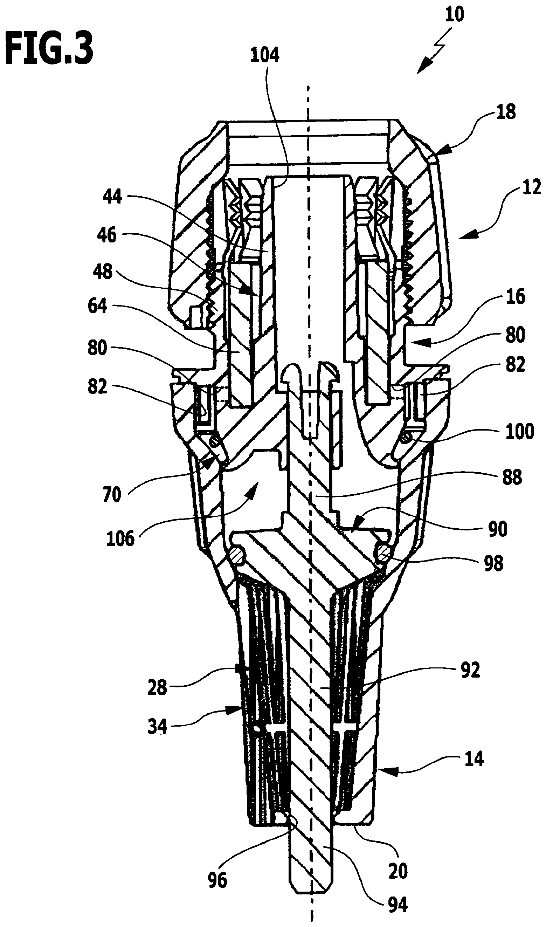

Durch Druckbeaufschlagung kann der zweite O-Ring 100 gedehnt werden, wobei er dann eine in Figur 3 dargestellte Offenstellung einnimmt, in der er eine Position in einem radial erweiterten Bereich des Entlastungskanals 70 einnimmt und hierbei mit seiner Außenseite in einem Abstand zur Außenwand 74 angeordnet ist. In dieser Stellung gibt der zweite O-Ring 100 den Entlastungskanal 70 frei, so dass Flüssigkeit über den Entlastungskanal 70 zu den Entlastungsöffnungen 82 fließen kann.

Der Ventilkörper 90 ist zwischen einer in Figur 1 dargestellten Offenstellung und einer in den Figuren 2 und 3 dargestellten Schließstellung hin und her bewegbar. In seiner Schließstellung liegt der Ventilkörper 90 mit seinem O-Ring 98 dicht an einem Ventilsitz 102 an, der von der Innenseite der ersten konischen Erweiterung 36 des ersten Gehäuseteils 14 gebildet wird. In seiner Offenstellung nimmt der Ventilkörper 90 einen Abstand zum Ventilsitz 102 ein. Dadurch ist eine Strömungsverbindung freigegeben zwischen der Einlassöffnung 34 und einer vom freien Ende des Anschlussnippels 44 gebildeten Auslassöffnung 104 des Gehäuses 12. Nimmt der Ventilkörper 90 seine Schließstellung ein, so wird die Strömungsverbindung zwischen der Einlassöffnung 30 und der Auslassöffnung 104 unterbrochen.

Die Saugschlaucharmatur 10 kann an einen Saugschlauch angeschlossen werden. Hierzu kann ein Endbereich des Saugschlauchs in axialer Richtung in den Ringraum 46 zwischen dem Anschlussnippel 44 und der Presshülse 48 eingeführt werden. Anschließend kann die Presshülse 48 mittels des dritten Gehäuseteils 18 radial nach innen gedrückt werden, so dass der in den Ringraum eingeführte Endbereich des Saugschlauchs dicht gegen den Anschlussnippel 44 gepresst wird.

Mit seinem der Saugschlaucharmatur 10 abgewandten Ende kann der Saugschlauch an den Saugeinlass eines Hochdruckreinigungsgerätes angeschlossen werden. Mittels des Hochdruckreinigungsgerätes kann dann Flüssigkeit, vorzugsweise Wasser, über die Saugschlaucharmatur 10 und den daran angeschlossenen Saugschlauch angesaugt werden. Während des Betriebs des Hochdruckreinigungsgerätes durchströmt die Flüssigkeit das Gehäuse 12 von der Einlassöffnung 34 zur Auslassöffnung 104, wobei der Ventilkörper 90 von der das Gehäuse 12 durchströmenden Flüssigkeit in seine Offenstellung bewegt wird. Der O-Ring 100 nimmt hierbei seine in den Figuren 1 und 2 dargestellte Schließstellung ein, in der er den Entlastungskanal 70 verschließt.

Wird das Hochdruckreinigungsgerät abgeschaltet, so bildet sich aufgrund der Rückspeisung von Druck aus dem Hochdruckbereich des Hochdruckreinigungsgerätes in den Niederdruckbereich des Hochdruckreinigungsgerätes ein Druckimpuls im Saugschlauch und damit auch im Anschlussnippel 44 aus. Dies hat zur Folge, dass der Ventilkörper 90 selbsttätig seine in den Figuren 2 und 3 dargestellte Schließstellung einnimmt, in der er die Strömungsverbindung zwischen der Auslassöffnung 104 und der Einlassöffnung 34 des Gehäuses 12 unterbricht, so dass aus dem Gehäuse 12 und aus dem daran angeschlossenen Saugschlauch keine Flüssigkeit über die Einlassöffnung 30 entweichen kann.

Übersteigt der Druckimpuls, der sich beim Abschalten des Hochdruckreinigungsgerätes ausbildet, einen vorgegebenen Maximaldruck, so wird der zweite O-Ring 100 aus seiner Schließstellung in seine in Figur 3 dargestellte Offenstellung überführt, so dass über den Entlastungskanal 70 Flüssigkeit aus dem Innenraum 106 des Gehäuses 12 entweichen kann. Der Innenraum 106 erstreckt sich im Gehäuse 12 vom Ventilsitz 102 bis zur Auslassöffnung 104.

Wie bereits erwähnt, wird während des Saugbetriebs des Hochdruckreinigungsgerätes Flüssigkeit angesaugt. Diese durchströmt den Filterkäfig28 von außen nach innen, wobei an der Außenseite des Filterkäfigs 28 Schmutzpartikel und sonstige Verunreinigungen abgeschieden werden. Wird das Hochdruckreinigungsgerät abgeschaltet und damit der Saugbetrieb beendet, so geht der Ventilkörper 90 selbsttätig in seine Schließstellung über. Der Benutzer hat nun die Möglichkeit, den Ventilkörper 90 manuell in seine Offenstellung zu überführen, so dass Flüssigkeit aus dem Innenraum 106 des Gehäuses 12 über die Einlassöffnung 34 entweichen kann, um den Filterkäfig 28 zu reinigen. Hierzu kann der Benutzer den aus dem Gehäuse 12 herausragenden Endabschnitt des Ventilstößels 92 ein Stück weit in das Gehäuse 12 eindrücken, um den Ventilkörper 90 in seine Offenstellung zu überführen. Der Benutzer hat beispielsweise die Möglichkeit, die Saugschlaucharmatur 10 mit ihrer Vorderseite 20 gegen einen Gegenstand zu drücken, so dass das aus dem Gehäuse 12 herausragende Ende des Ventilstößels 92 in Richtung auf die Vorderseite 20 des Gehäuses 12 verschoben wird.

Die Reinigung des Filterkäfigs 28 kann somit vom Benutzer auf einfache Weise durch manuelles Entsperren des vom Ventilkörper 90 und dem korrespondierenden Ventilsitz 102 gebildeten Rückschlagventils erfolgen.

Der Ventilkörper 90 nimmt allein aufgrund der auf ihn einwirkenden Druckbelastung wahlweise seine Offenstellung oder seine Schließstellung ein. Die Saugschlaucharmatur 10 weist keine Rückstellfeder auf, die den Ventilkörper 90 in seine Schließstellung überführen würde. Da Fehlen einer Rückstellfeder hat den Vorteil, dass die Flüssigkeit beim Durchströmen des Gehäuses 12 von dessen Einlassöffnung 34 zu dessen Auslassöffnung 104 nur sehr geringen Druckverlusten unterliegt. Dies wiederum hat zur Folge, dass der Saugbetrieb des Hochdruckreinigungsgerätes durch die Saugschlaucharmatur 10 nur wenig beeinflusst wird.

## Patentansprüche

1. Saugschlaucharmatur zum Anschließen an einen Saugschlauch eines Hochdruckreinigungsgerätes, mit einem Gehäuse (12), das eine Einlassöffnung (34) und eine Auslassöffnung (104) aufweist, wobei an der Einlassöffnung (34) eine Filtereinrichtung (28) und an der Auslassöffnung (104) eine Anschlusseinrichtung (44, 48) für den Saugschlauch angeordnet sind, und wobei im Gehäuse (12) ein in Richtung der Einlassöffnung (34) schließendes Rückschlagventil angeordnet ist, das einen Ventilkörper (90) aufweist, der im Gehäuse (12) zwischen einer Schließstellung und einer Offenstellung hin und her bewegbar ist, und wobei das Rückschlagventil manuell entsperrbar ist, **dadurch gekennzeichnet, dass** der Ventilkörper (90) mittels eines aus dem Gehäuse (12) herausragenden Stellorgans manuell in seine Offenstellung bewegbar ist, wobei das Stellorgan als Ventilstößel (92) ausgestaltet ist, der mit dem Ventilkörper (90) starr verbunden ist.

2. Saugschlaucharmatur nach Anspruch 1, **dadurch gekennzeichnet, dass** das Gehäuse (12) eine Vorderseite (20) und eine Rückseite (22) aufweist, wobei der Ventilstößel (92) an der Vorderseite (20) aus dem Gehäuse (12) herausragt.

3. Saugschlaucharmatur nach Anspruch 2, **dadurch gekennzeichnet, dass** an der Vorderseite (20) eine Durchgangsöffnung (96) angeordnet ist, die eine Führung des Ventilstößels (92) ausbildet.

4. Saugschlaucharmatur nach einem der voranstehenden Ansprüche, **dadurch gekennzeichnet, dass** das Rückschlagventil federlos ausgestaltet ist, wobei der Ventilkörper (90) bei Druckbeaufschlagung in Richtung der Einlassöffnung (34) selbsttätig schließt.

5. Saugschlaucharmatur nach einem der voranstehenden Ansprüche, **dadurch gekennzeichnet, dass** das Gehäuse (12) mindestens eine Entlastungsöffnung (82) aufweist, die mit einem zwischen einem Ventilsitz (102) des Rückschlagventils und der Auslassöffnung (104) angeordneten Innenraum (106) des Gehäuses (12) in Strömungsverbindung steht, wobei diese Strömungsverbindung mittels eines Entlastungsventils in Abhängigkeit von dem im Innenraum (106) des Gehäuses (12) herrschenden Druck selbsttätig unterbrechbar und freigebbar ist.

6. Saugschlaucharmatur nach Anspruch 5, **dadurch gekennzeichnet, dass** der Innenraum (106) des Gehäuses (12) über einen Entlastungskanal (70) mit der mindestens einen Entlastungsöffnung (82) in Strömungsverbindung steht, wobei im Entlastungskanal (70) ein in Abhängigkeit von dem im Innenraum (106) herrschenden Druck selbsttätig zwischen einer Schließstellung und einer Offenstellung hin und her bewegbarer Schließkörper (100) angeordnet ist.

7. Saugschlaucharmatur nach Anspruch 6, **dadurch gekennzeichnet, dass** der Entlastungskanal (70) ringförmig ausgestaltet ist, wobei sich sein Strömungsquerschnitt mit zunehmendem Abstand vom Innenraum (106) des Gehäuses (12) erweitert, und dass der Schließkörper als elastisch dehnbarer Schließring (100) ausgestaltet ist.

8. Saugschlaucharmatur nach Anspruch 7, **dadurch gekennzeichnet, dass** der Entlastungskanal (70) eine kegelmantelförmige Innenwand (72) und eine kegelmantelförmige Außenwand (74) aufweist, die den Entlastungskanal (70) begrenzen, wobei sich der Entlastungskanal (70) in Richtung der mindestens einen Entlastungsöffnung (82) kontinuierlich erweitert und der Schließring (100) den Entlastungskanal (70) in einer Schließstellung verschließt.

9. Saugschlaucharmatur nach Anspruch 7 oder 8, **dadurch gekennzeichnet, dass** der Schließring als O-Ring (100) ausgestaltet ist.

10. Saugschlaucharmatur nach einem der voranstehenden Ansprüche, **dadurch gekennzeichnet, dass** die Anschlusseinrichtung einen Anschlussnippel (44) aufweist, der unter Ausbildung eines Ringraums (46) von einer elastisch verformbaren Presshülse (48) umgeben ist, wobei ein Endbereich des Saugschlauchs in den Ringraum (46) einführbar und mittels der Presshülse (48) radial gegen den Anschlussnippel (44) pressbar ist.

11. Saugschlaucharmatur nach Anspruch 10, **dadurch gekennzeichnet, dass** auf die Presshülse (48) ein Klemmring (18) aufschraubbar ist.

12. Saugschlaucharmatur nach Anspruch 10 oder 11, **dadurch gekennzeichnet, dass** die Presshülse (48) mindestens eine Entlüftungsöffnung (80) aufweist zur Entlüftung des Ringraums (46).

13. Saugschlaucharmatur nach Anspruch 10, 11 oder 12, **dadurch gekennzeichnet, dass** im Ringraum (46) ein Schwimm- oder Gewichtskörper (64) angeordnet ist.

14. Saugschlaucharmatur nach Anspruch 13, **dadurch gekennzeichnet, dass** der Schwimm- oder Gewichtskörper (64) bedarfsweise in den Ringraum (46) einführbar und dem Ringraum (46) entnehmbar ist.

15. Saugschlaucharmatur nach einem der voranstehenden Ansprüche, **dadurch gekennzeichnet, dass** das Gehäuse (12) ein erstes und ein zweites Gehäuseteil (14, 16) aufweist, wobei das erste Gehäuseteil (14) die Filtereinrichtung (28) umfasst und mit dem zweiten Gehäuseteil (16) lösbar verbindbar ist.

16. Saugschlaucharmatur nach Anspruch 15, **dadurch gekennzeichnet, dass** das erste Gehäuseteil (14) einen Ventilsitz (102) des Rückschlagventils ausbildet und der Ventilkörper (90) des Rückschlagventils am zweiten Gehäuseteil (16) beweglich gehalten ist.

17. Saugschlaucharmatur nach Anspruch 16, **dadurch gekennzeichnet, dass** der Ventilkörper (90) des Rückschlagventils am zweiten Gehäuseteil (16) linear verschiebbar gehalten ist.

18. Saugschlaucharmatur nach Anspruch 17, **dadurch gekennzeichnet, dass** das zweite Gehäuseteil (16) ein Führungsteil (84) aufweist, an dem ein Führungselement (88) des Ventilkörpers (90) des Rückschlagventils linear verschiebbar gehalten ist und der mit einem Anschlussnippel (44) und einer den Anschlussnippel (44) unter Ausbildung eines Ringraums (46) in Umfangsrichtung umgebenden, radial verformbaren Presshülse (48) einstückig verbunden ist.

## Claims

1. Suction hose fitting for connecting to a suction hose of a high pressure cleaning appliance, having a housing (12) which comprises an inlet opening (34) and an outlet opening (104), wherein a filter device (28) is arranged on the inlet opening (34) and a connecting device (44, 48) for the suction hose is arranged on the outlet opening (104), and wherein in the housing (12) is arranged a check valve which closes in the direction of the inlet opening (34) and which comprises a valve body (90) which is moveable back and forth in the housing (12) between a closed position and an open position, and wherein the check valve is manually releasable, **characterized in that** the valve body (90) is manually moveable into its open position by means of an actuator projecting out of the housing (12), wherein the actuator is configured as a valve tappet (92) which is rigidly connected to the valve body (90).

2. Suction hose fitting in accordance with Claim 1, **characterized in that** the housing (12) comprises a front side (20) and a back side (22), wherein the valve tappet (92) projects out of the housing (12) on the front side (20).

3. Suction hose fitting in accordance with Claim 2, **characterized in that** a through hole (96) which forms a guide of the valve tappet (92) is arranged on the front side (20).

4. Suction hose fitting in accordance with any one of the preceding Claims, **characterized in that** the check valve is configured to be springless, wherein the valve body (90) automatically closes when pressure is applied in the direction of the inlet opening (34).

5. Suction hose fitting in accordance with any one of the preceding Claims, **characterized in that** the housing (12) comprises at least one relief opening (82) which is in flow connection with an inner space (106) of the housing (12) arranged between a valve seat (102) of the check valve and the outlet opening (104), wherein said flow connection is automatically interruptible and releasable by means of a relief valve depending on the pressure prevailing in the inner space (106) of the housing (12).

6. Suction hose fitting in accordance with Claim 5, **characterized in that** the inner space (106) of the housing (12) is in flow connection with the at least one relief opening (82) by way of a relief channel (70), wherein arranged in the relief channel (70) is a closing body (100) which is automatically moveable back and forth between a closed position and an open position depending on the pressure prevailing in the inner space (106).

7. Suction hose fitting in accordance with Claim 6, **characterized in that** the relief channel (70) is of annular configuration, wherein its flow cross section expands with increasing distance from the inner space (106) of the housing (12), and **in that** the closing body is configured as an elastically stretchable closing ring (100).

8. Suction hose fitting in accordance with Claim 7, **characterized in that** the relief channel (70) comprises a conical jacket shaped inner wall (72) and a conical jacket shaped outer wall (74) which delimit the relief channel (70), wherein the relief channel (70) continuously expands in the direction of the at least one relief opening (82) and the closing ring (100) closes the relief channel (70) in a closed position.

9. Suction hose fitting in accordance with Claim 7 or 8, **characterized in that** the closing ring is configured as an O-ring (100).

10. Suction hose fitting in accordance with any one of the preceding Claims, **characterized in that** the connecting device comprises a connecting nipple (44) which is surrounded by an elastically deformable press sleeve (48) while forming an annular space (46), wherein an end region of the suction hose is insertible into the annular space (46) and is pressable radially against the connecting nipple (44) by means of the press sleeve (48).

11. Suction hose fitting in accordance with Claim 10, **characterized in that** a clamping ring (18) is screwable onto the press sleeve (48).

12. Suction hose fitting in accordance with Claim 10 or 11, **characterized in that** the press sleeve (48) comprises at least one air vent opening (80) for venting the annular space (46).

13. Suction hose fitting in accordance with Claim 10, 11, or 12, **characterized in that** a floating or weight body (64) is arranged in the annular space (46).

14. Suction hose fitting in accordance with Claim 13, **characterized in that** the floating or weight body (64) is insertible into the annular space (46) and removable from the annular space (46) as required.

15. Suction hose fitting in accordance with any one of the preceding Claims, **characterized in that** the housing (12) comprises a first and a second housing part (14, 16), wherein the first housing part (14) comprises the filter device (28) and is detachably connectible to the second housing part (16).

16. Suction hose fitting in accordance with Claim 15, **characterized in that** the first housing part (14) forms a valve seat (102) of the check valve and the valve body (90) of the check valve is moveably held on the second housing part (16).

17. Suction hose fitting in accordance with Claim 16, **characterized in that** the valve body (90) of the check valve is linearly displaceably held on the second housing part (16).

18. Suction hose fitting in accordance with Claim 17, **characterized in that** the second housing part (16) comprises a guidance part (84) on which a guidance element (88) of the valve body (90) of the check valve is linearly displaceably held and which is integrally connected to a connecting nipple (44) and a radially deformable press sleeve (48) which surrounds the connecting nipple (44) in circumferential direction while forming an annular space (46).

## Revendications

1. Raccord de tuyau d'aspiration pour le raccordement à un tuyau d'aspiration d'un appareil de nettoyage haute pression, comprenant un boîtier (12) qui présente un orifice d'entrée (34) et un orifice de sortie (104), dans lequel un système de filtre (28) est agencé sur l'orifice d'entrée (34) et un système de raccordement (44, 48) pour le tuyau d'aspiration est agencé sur l'orifice de sortie (104), et dans lequel un clapet anti-retour se fermant en direction de l'orifice d'entrée (34) est agencé dans le boîtier (12), lequel clapet présente un corps de clapet (90) qui peut être animé d'un mouvement de va-et-vient dans le boîtier (12) entre une position de fermeture et une position d'ouverture, et dans lequel le clapet anti-retour peut être déverrouillé manuellement, **caractérisé en ce que** le corps de clapet (90) peut être déplacé manuellement dans sa position d'ouverture au moyen d'un organe de commande faisant saillie du boîtier (12), dans lequel l'organe de commande est réalisé sous la forme d'un poussoir de clapet (92) qui est relié rigidement au corps de clapet (90).

2. Raccord de tuyau d'aspiration selon la revendication 1, **caractérisé en ce que** le boîtier (12) présente une face avant (20) et une face arrière (22), dans lequel le poussoir de clapet (92) fait saillie du boîtier (12) sur la face avant (20).

3. Raccord de tuyau d'aspiration selon la revendication 2, **caractérisé en ce qu'**un orifice de passage (96), qui forme un guidage du poussoir de clapet (92), est ménagé sur la face avant (20).

4. Raccord de tuyau d'aspiration selon l'une quelconque des revendications précédentes, **caractérisé en ce que** le clapet anti-retour est exempt de ressort, dans lequel le corps de clapet (90) se ferme automatiquement en direction de l'orifice d'entrée (34) lorsqu'il est soumis en pression.

5. Raccord de tuyau d'aspiration selon l'une quelconque des revendications précédentes, **caractérisé en ce que** le boîtier (12) présente au moins un orifice de décharge (82), qui est en liaison fluidique avec un espace intérieur (106) du boîtier (12), lequel espace intérieur est situé entre un siège de clapet (102) du clapet anti-retour et l'orifice de sortie (104), dans lequel cette liaison fluidique peut être interrompue et libérée automatiquement au moyen d'une soupape de décharge en fonction de la pression régnant dans l'espace intérieur (106) du boîtier (12).

6. Raccord de tuyau d'aspiration selon la revendication 5, **caractérisé en ce que** l'espace intérieur (106) du boîtier (12) est en liaison fluidique avec l'orifice ou les orifices de décharge (82) par l'intermédiaire d'un canal de décharge (70), dans lequel un corps de fermeture (100) pouvant être animé d'un mouvement de va-et-vient entre une position de fermeture et une position d'ouverture en fonction d'une pression régnant dans l'espace intérieur (106) est agencé dans le canal de décharge (70).

7. Raccord de tuyau d'aspiration selon la revendication 6, **caractérisé en ce que** le canal de décharge (70) est annulaire, dans lequel sa section d'écoulement s'élargit à mesure que l'on s'éloigne de l'espace intérieur (106) du boîtier (12), et **en ce que** le corps de fermeture est réalisé sous la forme d'une bague de fermeture (100) extensible élastiquement.

8. Raccord de tuyau d'aspiration selon la revendication 7, **caractérisé en ce que** le canal de décharge (70) présente une paroi intérieure (72) en forme d'enveloppe conique et une paroi extérieure (74) en forme d'enveloppe conique, qui délimitent le canal de décharge (70), dans lequel le canal de décharge (70) s'élargit en continu en direction de l'orifice ou des orifices de décharge (82) et la bague de fermeture (100) ferme le canal de décharge (70) dans une position de fermeture.

9. Raccord de tuyau d'aspiration selon la revendication 7 ou 8, **caractérisé en ce que** la bague de fermeture est réalisée sous la forme d'un joint torique (100) .

10. Raccord de tuyau d'aspiration selon l'une quelconque des revendications précédentes, **caractérisé en ce que** le système de raccordement présente un manchon de raccordement (44), qui est entouré par une douille de pressage (48) déformable élastiquement, ce qui entraîne la formation d'un espace annulaire (46), dans lequel une zone d'extrémité du tuyau d'aspiration peut être introduite dans l'espace annulaire (46) et peut être pressée radialement contre le manchon de raccordement (44) au moyen de la douille de pressage (48) .

11. Raccord de tuyau d'aspiration selon la revendication 10, **caractérisé en ce qu'**une bague de serrage (18) peut être vissée sur la douille de pressage (48).

12. Raccord de tuyau d'aspiration selon la revendication 10 ou 11, **caractérisé en ce que** la douille de pressage (48) présente au moins un orifice de ventilation (80) destiné à ventiler l'espace annulaire (46).

13. Raccord de tuyau d'aspiration selon la revendication 10, 11, ou 12, **caractérisé en ce qu'**un corps flottant ou pondéral (64) est agencé dans l'espace annulaire (46).

14. Raccord de tuyau d'aspiration selon la revendication 13, **caractérisé en ce que** le corps flottant ou pondéral (64) peut si besoin est être introduit dans l'espace annulaire (46) et être prélevé de l'espace annulaire (46).

15. Raccord de tuyau d'aspiration selon l'une quelconque des revendications précédentes, **caractérisé en ce que** le boîtier (12) présente une première et une deuxième partie de boîtier (14, 16), dans lequel la première partie de boîtier (14) comporte le système de filtre (28) et peut être reliée de manière détachable à la deuxième partie de boîtier (16).

16. Raccord de tuyau d'aspiration selon la revendication 15, **caractérisé en ce que** la première partie de boîtier (14) forme un siège de clapet (102) du clapet anti-retour et le corps de clapet (90) du clapet anti-retour est retenu mobile sur la deuxième partie de boîtier (16).

17. Raccord de tuyau d'aspiration selon la revendication 16, **caractérisé en ce que** le corps de clapet (90) du clapet anti-retour est retenu sur la deuxième partie de boîtier (16) de manière à pouvoir coulisser linéairement.

18. Raccord de tuyau d'aspiration selon la revendication 17, **caractérisé en ce que** la deuxième partie de boîtier (16) comprend une partie de guidage (84), sur laquelle un élément de guidage (88) du corps de clapet (90) du clapet anti-retour est retenu de manière à pouvoir coulisser linéairement et qui est reliée d'une seule pièce à un manchon de raccordement (44) et à une douille de pressage (48) déformable radialement entourant le manchon de raccordement (44) dans la direction périphérique, ce qui entraîne la formation d'un espace annulaire (46).
